# EUROPEAN PATENT SPECIFICATION

(11) **EP 0 631 543 B1**
(45) Date of publication and mention of the grant of the patent: **25.09.1996**
(21) Application number: 93908225.1
(22) Date of filing: 24.03.1993
(51) Int. Cl.: B60B 3/08, B21D 53/26

(54) **RIM FOR A VEHICLE AND A METHOD FOR MANUFACTURING OF THE RIM**
FELGE FÜR FAHRZEUG UND HERSTELLUNGSVERFAHREN
JANTE POUR VEHICULE ET SON PROCEDE DE FABRICATION

(30) Priority: 24.03.1992 SE 9200909
(43) Date of publication of application: 04.01.1995
(73) Proprietor: SUNDGREN, Anders, S-954 41 Sunderbyn (SE)
(72) Inventor: SUNDGREN, Anders, S-954 41 Sunderbyn (SE)
(74) Representative: Onn, Thorsten
(86) International application number: SE9300248
(87) International publication number: WO9318929

(56) References cited:
- SE-B- 370 357
- US-A- 3 909 065

## Description

The present invention relates to a vehicle wheel rim and to a method for its manufacture.

One of the aims of present day car manufacturing industries is to reduce the total weight of cars, by reducing the weight of car components. This is achieved by optimizing existing constructions, choosing lighter materials, finding new material combinations (composites), or using different manufacturing methods (see for instance the document SE-B-370 357). At the same time, the car industry is extremely sensitive with regard to product design and consequently methods which enable design changes without incurring too much expense are often chosen.

Normally, solely steel rims are used as standard on the wheels of private cars. Although these rims can be produced relatively cheaply, they greatly limit design possibilities. In order to satisfy customers who desire a special rim design, special rims made of aluminium or magnesium are available instead. These rims, however, demand a much higher price and are just as heavy as corresponding steel rims. Furthermore, more energy is consumed in the manufacture of magnesium or aluminium rims and the manufacture of such rims creates a dirtier environment than the manufacture of corresponding steel rims. These special design rims are also susceptible to damage from external mechanical sources and create many problems when attaching balancing weights to the rims.

These problems are solved by means of an inventive wheel rim having the characteristic features set forth in the characterizing clause of the following Claim 1 and by a method for the manufacture of the wheel rim, in accordance with the characterizing clause of Claim 5. The lightness and mechanical strength of the inventive wheel rim is achieved in that the rim includes an outer hub, an inner hub and a base, wherein the inner hub and the outer hub include respectively male and female type snap coupling means which function to lock the inner hub to the outer hub, and wherein the outer hub and the rim base include respectively male and female type snap coupling means which function to lock the outer hub to the rim base. The space defined between the inner hub, the outer hub and the rim base is filled with foam and glue, so as to obtain a strong and light sandwich construction.

The invention will now be described in more detail with reference to an exemplifying embodiment thereof and also with reference to the accompanying drawings, in which
Figure 1 is a cross-sectional view of the main components of the inventive wheel rim, prior to assembling said components;
Figure 2 is a cross-sectional view of the inventive wheel rim subsequent to assembly;
Figure 3 shows two stages of the rim manufacturing process; and
Figure 4 is a cross-sectional view of part of the inventive wheel rim, illustrating the construction and function of the snap coupling means.

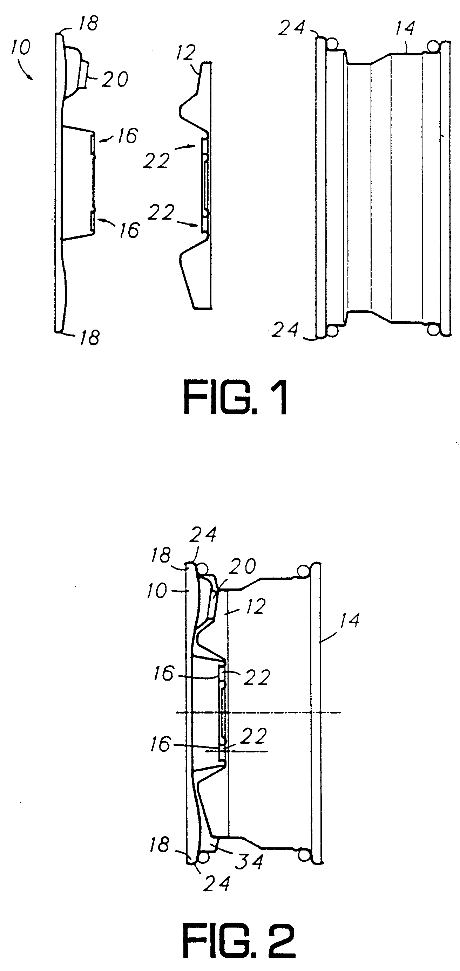

Figure 1 is a cross-sectional view of the main components of the inventive wheel rim prior to assembly. The inventive rim includes an outer hub 10, an inner hub 12 and a rim base 14. As shown in Figure 1, the outer hub 10 is provided with male-type, first snap coupling means 16 and a male-type second snap coupling means 18. The male-type first snap coupling means 16 is circular and extends in the centre of the hub. The male-type second snap coupling means 18 is also circular and is positioned at the outer edge of the outer hub 10. The outer hub 10 also has a flanged abutment means 20 (flange not shown) where the flange is intended to fit into an aperture (not shown) in the inner hub 12 when the wheel rim is assembled. The inner wheel 12 is provided with a circular, female-type snap coupling means 22 which is positioned at the centre of the hub and which is intended to fit into first, male-type snap coupling means 16 on the outer hub. The rim base 14 is provided with a circular, female-type snap coupling means 24 at one outer edge of the rim base 14. This female snap coupling means 24 is intended to fit onto the second, male snap coupling means 18 of the outer hub 10.

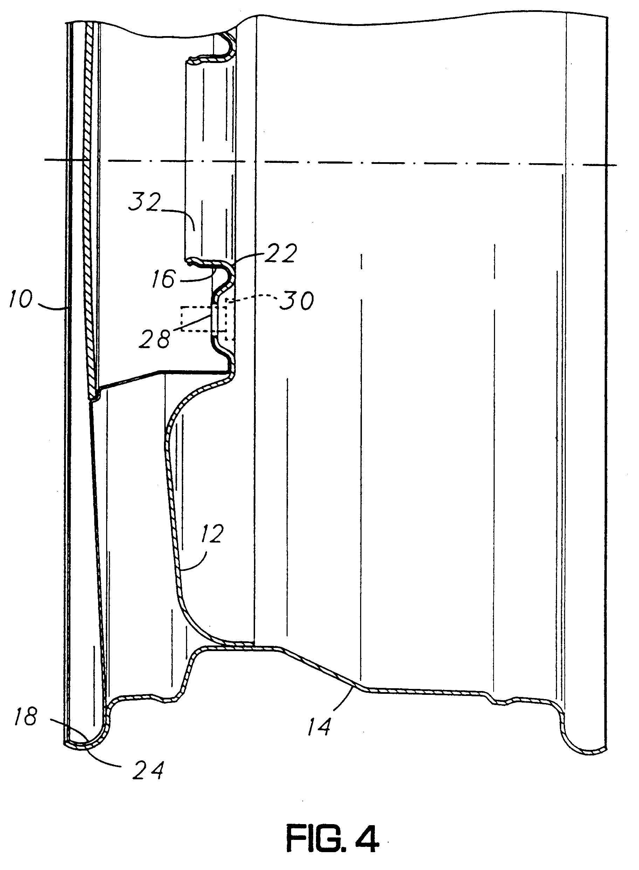

Figure 2 is a cross-sectional view of the inventive wheel rim after assembly. Like parts in Figures 1 and 2 have been identified with like reference signs. In assembling the wheel rim, the inner hub 12 has been pressed into the rim base 14 and glued and/or welded thereto. The outer hub 10 is then mounted on the assembly consisting of the inner hub 12 and the rim base 14. When fitting the outer hub 10, the hub is "snapped" firmly to the inner hub 12 at the centre of the hub, by fitting the first, male snap coupling means 16 into the female snap coupling means 22 of the inner hub, therewith mutually locking the rim halves. When fitting the outer hub 10, the hub is also "snapped" firmly onto the rim base 14, by fitting the second male snap coupling means 18 on the outer hub into the female snap coupling means 24 on the rim base, therewith locking the outer hub 10 to the wheel base 14. The wheel rim is stiffer, more rigid, at those attachment points where the snap coupling means hold the rim components together, because of the double plates obtained therewith (see also Figure 4). The supportive part of the rim is the inner hub 12, which is glued and welded to the inner surface of the rim base. Glue and foam 34, preferably polyurethane glue and polyurethane foam 34, are injected into the space formed between the outer hub 10, the inner hub 12 and the rim base 14, through a suitable number of holes. The foam and glue are injected into said space partly to prevent the collection of condensation and dirt and partly to glue together the hub halves and create a firm sandwich construction. It will be seen from Figure 2 that the outer hub abutment means 20 lies against the inner hub 12. Although not evident from Figure 2, the flange of the abutment means 20 is located in holes in the inner hub 12. The inner hub 12 has a construction which affords maximum strength to the hub and is manufactured from steel plate, preferably boron steel having a thickness of 1.2 mm for instance. The rim base 14 is manufactured, e.g., from 1.2 mm metal plate which is welded to form a cylinder which is then roll-shaped to the correct profile. The outer hub 10, which determines the appearance of the rim, is manufactured from thinner metal plate, e.g. 0.7 mm, to enable small radii to be pressed more readily. This facilitates design possibilities to a modern varied design which simulates cast aluminium rims. The outer hub 10 is preferably manufactured from boron steel, or optionally from aluminium, metal plate or standard steel.

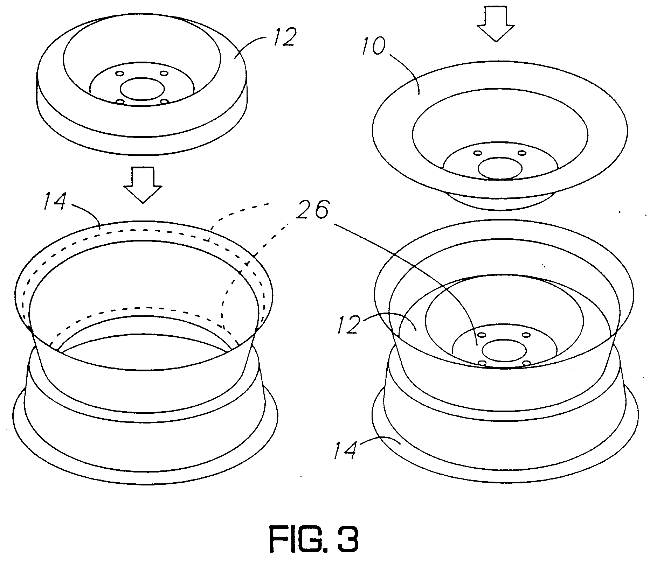

Figure 3 illustrates two stages in the manufacture of the wheel rim. As will be seen from Figure 3, glue 26 is applied to the rim base 14 and also to the inner hub 12. The inner hub 12 is glued to the rim base 14, as shown to the left of Figure 3, and also welded thereto. Glue 26 is then applied to the rim base 14 and also to the inner hub 12, whereafter the outer hub 10 is fitted in position. The outer hub 10 is thus secured with the aid of glue and also with the aid of the aforesaid snap coupling means.

Figure 4 is a cross-sectional view which illustrates part of the inventive wheel rim and which is intended to illustrate the construction and working method of the snap coupling means. Figure 4 illustrates part of the view shown in Figure 2 on a larger scale. The mutually relative positions of the outer hub 10, the inner hub 12 and the rim base 14 in the assembled state of the wheel rim can be clearly seen from Figure 4. The reference numeral 32 identifies the centre hole of the wheel rim and reference numeral 28 identifies a hole intended for a wheel bolt 30, a suitable number, for instance four, of such holes being provided. Also shown is a cover plate which is fitted to the outer hub 10 and covers the rim centre hole 32 and the wheel bolts 30. This cover plate is lockable and renders stealing of the tyres difficult to achieve, besides preventing the ingress of dirt. The manner in which the male and female snap coupling means 18, 24 lock the outer hub 10 to the rim base 14, and how the male and female snap coupling means 16, 17 lock the inner hub 12 to the outer hub 10 can be readily seen from Figure 4. This locking effect is obtained because the shape of the second male snap coupling means 18 of the outer hub corresponds to the shape to the female snap coupling means 24 of the rim base, although the sizes of respective means are different (the diameters). This size difference creates a space problem when pressing the outer hub 10 and the rim base 14 together. The female snap coupling means 24 of the rim base are first forced apart and then return to their original form when the snap coupling means 24 of the rim base grips around the second male snap coupling means 18 of the outer hub. The first male snap coupling means 16 of the outer hub and the female snap coupling means 22 of the inner hub function in a corresponding manner, even though their cross-sectional shape is different to that of the snap coupling means 18, 24. The snap coupling means 16, 22 of the Figure 4 embodiment have a cross-sectional shape which corresponds generally to two mutually U-shaped grooves which extend around the centre hole 32. The rim becomes stiffer because of the double plates obtained at the snap coupling means 16, 18, 22, 24, therewith enabling the outer hub 10, the inner hub 12 and the rim base 14 to be made of relatively thin metal plate, so as to keep down the total weight of the wheel rim.

A description of the method of manufacture of the inventive wheel rim will now follow. The inner hub 12 containing a female snap coupling means is first pressed from boron steel plate for instance. An outer hub 10 containing a first male snap coupling means 16 and a second male snap coupling means 18 is pressed from thin metal plate, for instance boron steel plate. The rim base 14 is manufactured by roll-shaping the base from, e.g., boron steel plate. Subsequent to cutting, welding the plate together to form a cylinder, the cylinder is roll-shaped to the correct profile. The next stage of manufacture involves pressing the inner hub 12 into the rim base 14 and welding the hub and base together to form a sub-assembly, which is then placed in a fixture and heated in a tempering furnace for instance, to the correct temperature. The sub-assembly held in the fixture is then cooled to harden/temper the sub-assembly, this cooling being effected, for instance, by spraying water onto the sub-assembly through spray nozzles. In the next stage of manufacture, the outer hub 10 is fitted and glued to the sub-assembly, so that the female snap coupling means 22 of the inner hub are locked to the first male snap coupling means 16 of the outer hub, and so that the female snap coupling means 24 of the rim base are locked to the second male snap coupling means 18 of the outer hub. Glue and foam, preferably polyurethane glue and polyurethane foam 34, are then injected into the space formed between the inner hub 12, the outer hub 10 and the rim base 14. The glue and foam are injected through appropriate holes on the rear side of the rim, these holes then being plugged. When the injection process has been completed, the finished wheel rim may be removed and the surfaces of the rim treated. The aforesaid glue will preferably be a two-component glue of polyurethane type, which affords good properties at both high and low temperatures. The glue is also tough and therewith capable of withstanding external mechanical forces on the rim.

The selection of material and the method of manufacture provide a wheel rim which is lighter in weight than wheel rims that are made of aluminium, magnesium, and conventional steel wheel rims. The design options are quite comparable with cast wheel rims, although at a much lower cost. The lower total weight of the wheel rim improves vehicle performance, therewith also contributing to a better environment. As a result of the construction of the inventive wheel rim, there is obtained a strong and partially resilient rim which improves road performances. The sandwich construction assists in reducing sound levels, since the polyurethane foam dampens body sound in the wheel rim. The lower energy consumption afforded by the manufacture of the inventive wheel rim and the reduced need of aluminium rims and the reduced manufacturing problems associated therewith also have a favourable effect on the environment.

It will be understood that the illustrated exemplifying embodiment of the inventive wheel rim does not limit the scope of the present invention, and that the scope of the invention is limited solely by the scope of the following claims.

## Claims

1. A vehicle wheel rim, particularly a car wheel rim, comprising an outer hub (10), an inner hub (12), and a rim base (14), wherein the outer hub (10) and the inner hub (12) have a number of holes (28) for receiving through-passing wheel bolts (30), **characterized** in that the inner hub (12) and the outer hub (10) include female and male type snap coupling means (22, 16) for locking the inner hub (12) to the outer hub (10); in that the outer hub (10) and the rim base (14) include male and female type snap coupling means (18, 24) for locking the outer hub (10) to the rim base (14); and in that the space defined between the inner hub (12), the outer hub (10) and the rim base (14) is filled with foam (34) to obtain a strong sandwich construction.

2. A wheel rim according to Claim 1, **characterized** in that the snap coupling means (16, 22) of the inner hub (12) and the outer hub (10) are arranged at the centre (32) of the hub; and in that the space defined between the inner hub (12), the outer hub (10) and the rim base (14) is filled with two-component glue and polyurethane foam (34).

3. A wheel rim according to Claim 2, **characterized** in that the locking effect of the snap coupling means (16, 22; 18, 24) is achieved by virtue of the fact that the cross-sectional shapes of respective male and female snap coupling means (16, 22; 18, 24) are mutually the same but of mutually different size; in that the inner hub (12) is welded firmly to the rim base (14); and in that the outer hub (10) is also glued to the rim base (14).

4. A wheel rim according to Claim 3, **characterized** in that the inner hub (12) and the rim base (14) are manufactured from boron steel; and in that the outer hub (10) is manufactured from either boron steel, aluminium or a plastic material.

5. A method of manufacturing a wheel rim according to Claim 1, comprising:
pressing an inner hub (12) including a female snap coupling means (22) from steel plate;
pressing an outer hub (10) including a first male snap coupling means (16) and a second male snap coupling means (18) from steel plate;
roll-forming and welding from steel plate a rim base (14) which includes a female snap coupling means (24);
fitting the inner hub (12) to the rim base (14) and welding said hub and said base together to form a sub-assembly; heating the sub-assembly (12, 14) to the requisite tempering temperature;
placing the sub-assembly (12, 14) in a fixture and cooling said sub-assembly;
fitting the outer hub (10) to the sub-assembly (12, 14) and gluing said hub to said sub-assembly, said outer hub being fitted so that the female snap coupling means (22) of the inner hub lock to the first male snap coupling means (16) of the outer hub and so that the female snap coupling means (24) of the rim base lock to the second male snap coupling means (18) of the outer hub; and
injecting glue and foam (34) into the space defined between the inner hub (12), the outer hub (10) and the rim base (14), to form a strong sandwich construction.

6. A method according to Claim 5, **characterized** by placing the sub-assembly comprised of the mutually welded inner hub (12) and rim base (14) in a fixture and calibrating the measurements of the unit; and subjecting the sub-assembly in said fixture to a heat treatment stage;
wherein the heat treatment stage is effected in a tempering oven; and
wherein cooling in the cooling stage is effected with water.

7. A method according to Claim 6, **characterized** in that the glue and foam (34) used in the injection stage are comprised of polyurethane glue and polyurethane foam (34) respectively.

## Patentansprüche

1. Fahrzeug-Radfelge, insbesondere Auto-Radfelge, die eine Außennabe (10), eine Innennabe (12) und eine Felgenbasis (14) umfaßt, wobei die Außennabe (10) und die Innennabe (12) eine Anzahl von Löchern (28) zur Aufnahme hindurchtretender Radbolzen (30) aufweist, **dadurch gekennzeichnet,** daß die Innennabe (12) und die Außennabe (10) buchsen- und steckerartige Schnappkupplungsmittel (22, 16) zum Befestigen der Innennabe (12) an der Außennabe (10) umfassen; daß die Außennabe (10) und die Felgenbasis (14) stecker- und buchsenartige Schnappkupplungsmittel (18, 24) zum Befestigen der Außennabe (10) an der Felgenbasis (14) umfassen; und daß der zwischen der Innennabe (12), der Außennabe (10) und der Felgenbasis (14) begrenzte Raum zum Erhalt einer stabilen Sandwich-Konstruktion mit Schaum (34) gefüllt ist.

2. Radfelge nach Anspruch 1, **dadurch gekennzeichnet,** daß das Schnappkupplungsmittel (16, 22) der Innennabe (12) und der Außennabe (10) an der Mitte (32) der Nabe angeordnet ist; und daß der zwischen der Innennabe (12), der Außennabe (10) und der Felgenbasis (14) begrenzte Raum mit Zweikomponentenklebstoff und Polyurethanschaum (34) gefüllt ist.

3. Radfelge nach Anspruch 2, **dadurch gekennzeichnet,** daß der Befestigungseffekt der Schnappkupplungsmittel (16, 22; 18, 24) aufgrund der Tatsache erreicht wird, daß die Querschnittsformen der jeweiligen Stecker- und Buchsen-Schnappkupplungsmittel (16, 22; 18, 24) einander im wesentlichen gleich, jedoch voneinander unterschiedlicher Größe sind; daß die Innennabe (12) fest an die Felgenbasis (14) geschweißt ist; und daß die Außennabe (10) auch an die Felgenbasis (14) geklebt ist.

4. Radfelge nach Anspruch 3, **dadurch gekennzeichnet,** daß die Innennabe (12) und die Radbasis (14) aus Borstahl hergestellt sind; und daß die Außennabe (10) aus entweder Borstahl, Aluminium oder Kunststoffmaterial hergestellt ist.

5. Verfahren zur Herstellung einer Radfelge nach Anspruch 1, umfassend:
Pressen einer ein Buchsen-Schnappkupplungsmittel (22) aufweisenden Innennabe (12) aus Stahlblech;
Pressen einer ein erstes Stecker-Schnappkupplungsmittel (14) und ein zweites Stecker-Schnappkupplungsmittel (18) aufweisenden Außennabe (10) aus Stahlblech;
Walzformen und Schweißen einer Felgenbasis (14) aus Stahlblech, welche ein Buchsen-Schnappkupplungsmittel (24) umfaßt;
Setzen der Innennabe (12) auf die Felgenbasis (14) und Verschweißen der Nabe mit der Basis zur Bildung einer Unteranordnung;
Erwärmen der Unteranordnung (12, 14) auf die erforderliche Anlaßtemperatur;
Anordnen der Unteranordnung (12, 14) in einer Befestigung und Kühlen der Unteranordnung;
Setzen der Außennabe (10) auf die Unteranordnung (12, 14) und Kleben der Nabe an die Unteranordnung, wobei die Außennabe derart aufgesetzt wird, daß das Buchsen-Schnappkupplungsmittel (22) der Innennabe an dem ersten Stecker-Schnappkupplungsmittel (16) der Außennabe befestigt wird und derart, daß das Buchsen-Schnappkupplungmittel (24) der Felgenbasis an dem zweiten Stecker-Schnappkupplungsmittel (18) der Außennabe befestigt wird; und
Einspritzen von Klebstoff und Schaum (34) in den zwischen der Innennabe (12), der Außennabe (10) und der Felgenbasis (14) begrenzten Raum zur Bildung einer stabilen Sandwich-Konstruktion.

6. Verfahren nach Anspruch 5, **gekennzeichnet durch** Anordnen der Unteranordnung, die aus der mit der Felgenbasis (14) verschweißten Innennabe (12) gebildet ist, in einer Befestigung und Kalibrieren der Abmessungen der Einheit; und Unterziehen der Unteranordnung in der Befestigung einer Wärmebehandlungsstufe;
wobei die Wärmebehandlungsstufe in einem Anlaßofen durchgeführt wird; und
wobei das Kühlen in der Kühlstufe mit Wasser durchgeführt wird.

7. Verfahren nach Anspruch 6, **dadurch gekennzeichnet,** daß der in der Einspritzstufe verwendete Klebstoff und Schaum (34) aus Polyurethanklebstoff bzw. Polyurethanschaum (34) gebildet ist.

## Revendications

1. Jante de roue de véhicule, notamment jante de roue d'automobile, comprenant un moyeu externe (10), un moyeu interne (12) et une base (14) de jante, dans laquelle le moyen externe (10) et le moyeu interne (12) ont un certain nombre de trous (28) pour le passage de boulons (30) de fixation de roue, caractérisée en ce que le moyeu interne (12) et le moyeu externe (10) ont des dispositifs femelle et mâle d'accouplement (22, 16) par enclenchement destinés à bloquer le moyeu interne (12) sur le moyeu externe (10), en ce que le moyeu externe (10) et la base de jante (14) ont des dispositifs mâle et femelle d'accouplement (18, 24) par enclenchement destinés à bloquer le moyeu externe (10) sur la base de jante (14), et en ce que l'espace délimité entre le moyeu interne (12) et le moyeu externe (10) et la base de jante (14) est rempli de mousse (34) afin qu'une robuste construction sandwich soit obtenue.

2. Jante de roue selon la revendication 1, caractérisée en ce que les dispositifs (16, 22) d'accouplement par enclenchement du moyeu interne (12) et du moyeu externe (10) sont placés au centre (32) du moyeu, et en ce que l'espace délimité entre le moyeu interne (12), le moyeu externe (10) et la base de jante (14) est rempli d'une colle à deux composants et d'une mousse de polyuréthanne (34).

3. Jante de roue selon la revendication 2, caractérisée en ce que l'effet de blocage des dispositifs d'accouplement par enclenchement (16, 22 ; 18, 24) est obtenu grâce au fait que les configurations en coupe des dispositifs respectifs mâle et femelle (16, 22 ; 18, 24) d'accouplement par enclenchement sont mutuellement les mêmes mais de dimensions mutuellement différentes, en ce que le moyeu interne (12) est fermement soudé sur la base de jante (14), et en ce que le moyeu externe (10) est aussi collé sur la base de jante (14).

4. Jante de roue selon la revendication 3, caractérisée en ce que le moyeu interne (12) et la base de jante (14) sont fabriqués en acier au bore, et en ce que le moyeu externe (10) est fabriqué à partir d'acier au bore, d'aluminium ou d'une matière plastique.

5. Procédé de fabrication d'une jante de roue selon la revendication 1, comprenant :
l'emboutissage dans une plaque d'acier d'un moyeu interne (12) comprenant un dispositif femelle (22) d'accouplement par enclenchement,
l'emboutissage dans une plaque d'acier d'un moyeu externe (10) ayant un premier dispositif mâle (16) d'accouplement par enclenchement et un second dispositif mâle (18) d'accouplement par enclenchement,
le formage par roulage et le soudage à partir d'une plaque d'acier d'une base de jante (14) qui comporte un dispositif femelle (24) d'accouplement par enclenchement,
le montage du moyeu interne (12) sur la base de jante (14) et le soudage du moyeu et de la base pour la formation d'un sous-ensemble,
le chauffage du sous-ensemble (12, 14) à la température nécessaire de recuit,
la disposition du sous-ensemble (12, 14) dans un organe de montage et le refroidissement du sous-ensemble,
le montage du moyeu externe (10) sur le sous-ensemble (12, 14) et le collage du moyeu sur le sous-ensemble, le moyeu externe étant monté de manière que le dispositif femelle (22) d'accouplement par enclenchement du moyeu interne se bloque sur le premier dispositif mâle (16) d'accouplement par enclenchement du moyeu externe, et ainsi de manière que le dispositif femelle (24) d'accouplement par enclenchement de la base de jante se bloque sur le second dispositif mâle (18) d'accouplement par enclenchement du moyeu externe, et
l'injection de colle et d'une mousse (34) dans l'espace délimité entre le moyeu interne (12), le moyeu externe (10) et la base de jante (14) pour la formation d'une robuste construction sandwich.

6. Procédé selon la revendication 5, caractérisé par la disposition du sous-ensemble formé du moyeu interne (12) et de la base de jante (14) qui sont soudés mutuellement dans un organe de montage et le calibrage des mesures de l'ensemble, et
l'application d'une étape de traitement thermique au sous-ensemble dans l'organe de montage,
dans lequel l'étape de traitement thermique est réalisée dans un four de recuit, et
le refroidissement, dans l'étape de refroidissement, est réalisé avec de l'eau.

7. Procédé selon la revendication 6, caractérisé en ce que la colle et la mousse (34) utilisées dans l'étape d'injection sont formées d'une colle de polyuréthanne et dune mousse de polyuréthanne (34) respectivement.
